# EUROPÄISCHE PATENTSCHRIFT

(11) **EP 0 726 415 B1**
(45) Veröffentlichungstag und Bekanntmachung des Hinweises auf die Patenterteilung: **17.05.2000**
(21) Anmeldenummer: 95120283.7
(22) Anmeldetag: 21.12.1995
(51) Int. Cl.: F16L 3/233, F16L 3/137

(54) **Halteelement**
Retaining element
Elément de fixation

(30) Priorität: 08.02.1995 DE 19504114; 26.04.1995 DE 19515409
(43) Veröffentlichungstag der Anmeldung: 14.08.1996
(73) Patentinhaber: TRW Automotive Electronics & Components GmbH & Co. KG, 78315 Radolfzell (DE)
(72) Erfinder: Kraus, Willibald, D-67269 Grünstadt (DE)
(74) Vertreter: Schieschke, Klaus, Dipl.-Ing.

(56) Entgegenhaltungen:
- DE-A- 3 230 852
- GB-A- 873 304
- US-A- 3 144 695
- US-A- 3 465 992
- US-A- 4 866 816

## Beschreibung

Die Erfindung bezieht sich auf ein Halteelement aus Kunststoff zur Befestigung mindestens eines rohrförmigen Körpers an einem Träger, mit einem mit dem Träger verbindbaren Befestigungsbereich und einem bandförmigen, den rohrförmigen Körper mit seiner Innenseite umgreifenden Haltebereich mit endseitiger Rast, wobei die Rast mit einer aus einem Zapfenbereich bestehenden Gegenrast verbindbar ist.

Als Stand der Technik ist bereits ein derartiges Halteelement bekannt (US-A-3 144 695), bei welchem ein Zapfen in eine Muffe eingreift, die einen Flansch aufweist. Dieser Flansch greift zur Befestigung in eine Ausnehmung eines Trägers bzw. ist mit diesem verbindbar. Hierbei weitet der Zapfen beim Einsetzen in die Muffe den Flansch auf, wobei bei der Montage zuerst die Muffe mit dem Flansch in den Träger eingesetzt werden muss. Erst danach kann nach dem Umgreifen eines zu befestigenden Körpers der Zapfen in die Muffe eingeschoben werden.

Weiterer Stand der Technik ist ein Halteelement (GB-A-873,304), bei welchem mit Hilfe eines speziellen Montagewerkzeuges der Haltebereich über die Gegenrast gestülpt wird, bis die Öffnungen hinter den entsprechenden Mund der Gegenrast eingelagert sind. Bei dieser bekannten Ausführung ist der mit einem Träger verbindbare Befestigungsbereich ein anderes Element als die Gegenrast, welche zur Lagerung des einen rohrförmigen Körper umgreifenden Haltebereichs vorgesehen ist.

Als Stand der Technik ist darüber hinaus ein Halteelement bekannt (DE 42 25 742), welches so ausgebildet ist, daß an beiden Enden eines bandförmigen Haltebereichs die Rast und die Gegenrast ausgebildet ist, wobei sich in Montagestellung die Rast in der Gegenrast einlagert und die gesamte Einheit dann so in einen Träger einsetzbar ist. Bei dieser bekannten Konstruktion muß die Montage, d.h. das Einsetzen der Rast in die Gegenrast, exakt erfolgen, um einen einwandfreien Verschluß des Halteelements vor dessen Einsetzen in eine Öffnung eines Trägers zu gewährleisten.

Zum Stand der Technik zählt weiterhin ein aus Kunststoff bestehendes Halteelement (GB 1 022 820), dessen bandförmiger Haltebereich den rohrförmigen Körper bügelartig überdeckt und dann über eine Rastnase in eine Gegenrast eingreift. Hier kann die Gefahr bestehen, daß sich Rast und Gegenrast voneinander lösen, so daß die einwandfreie Halterung des rohrförmigen Körpers nicht gewährleistet ist.

Weiterer Stand der Technik ist ein Halteelement (GB 2 187 255 A), bei welchem ein bandförmiger Haltebereich nach Umschlingen eines rohrförmigen Körpers in einen konusförmig ausgebildeten Zapfen eingreift, welcher seinerseits an einem Träger zu befestigen ist. Es ergibt sich hieraus eine relativ umständliche Handhabung der gesamten Einheit beim Öffnen bzw. Schließen dieses Halteelements.

Demgegenüber besteht die Aufgabe der vorliegenden Erfindung darin, ein Halteelement der eingangs genannten Art so auszubilden, dass bei einfachem Aufbau eine schnelle Montage gewährleistet ist, und dieses nach Umschlingen eines rohrförmigen Körper mit einem Träger verbunden werden kann, wobei das geschlossene Halteelement funktionssicher auch bei größeren Belastungen verschiedene rohrförmige Körper umschließen soll.

Diese Aufgabe wird erfindungsgemäß dadurch gelöst, dass der Befestigungsbereich als Zapfenbereich mit einem Bund und die Rast als Ring ausgebildet ist, der von seiner einen zu umschlingenden Körper zugewandten Innenseite her in Richtung der Längsachse des Befestigungselements auf den Zapfenbereich aufschiebbar ist. Es ergibt sich damit der Vorteil eines für eine Montage neuen und einfachen Weges, wonach das erfindungsgemäße Halteelement nach dem Umschlingen mindestens eines rohrförmigen Körpers einen geschlossenen Montagezustand einnimmt und erst dann mit einem Träger verbunden werden kann.

Nach einer Ausführungsform der Erfindung kann der Ring geschlossene Form besitzen und in Richtung der Längsachse des Befestigungselements auf den Zapfenbereich aufschiebbar sein, wobei der Bund als Anschlag für den Ring dient.

Alternativ besteht auch die Möglichkeit, daß der Ring mit einem durchgehenden Schlitz versehen und quer zur Längsachse auf den Zapfenbereich aufschiebbar ist. In beiden Fällen ist eine schnelle Montage gewährleistet, wobei außerdem in Schließstellung der rohrförmige Körper funktionssicher durch das Haltelement an einem Träger befestigt ist.

Der Ring kann in eine umlaufende Dichtlippe übergehen, so daß die Trägeröffnung abgedeckt ist.

Nach einer weiteren Ausführungsform kann der bandförmige Haltebereich und der Ring aus einer weichen Materialkomponente bestehen, wohingegen der Befestigungsbereich und die dem bandförmigen Haltebereich zugewandte Oberseite des Rings aus einer härteren Materialkomponente gefertigt ist. Das Halteelement ist hierbei in an sich bekannter Weise im Zwei-Komponenten-Spritzverfahren hergestellt, wobei sich der Vorteil ergibt, daß infolge der Ausbildung des Rings aus der weicheren Materialkomponente eine automatische Dichtwirkung gegenüber dem Befestigungsbereich erzielt wird.

Die als Scheibe ausgebildete Oberseite kann den gesamten Bereich des Rings überdecken und eine geringere Materialdicke besitzen als dieser Ring. Hierbei kann die Scheibe am inneren Umfang eine sich in einer Ausnehmung des Rings einlagernde Schulter besitzen.

Vorteilhafte Weiterbildungen ergeben sich aus den Unteransprüchen.

Die Erfindung wird nachfolgend anhand von in der Zeichnung dargestellten Ausführungsbeispielen näher beschrieben. In der Zeichnung zeigen:
- Fig. 1: eine perspektivische Ansicht eines erfindungsgemäßen Halteelements in Offenstellung;
- Fig. 2: das Halteelement nach Fig. 1 in Montagestellung im Mittelschnitt;
- Fig. 3: eine andere Ausführungsform des erfindungsgemäßen Halteelements in Seitenansicht;
- Fig. 4: das Halteelement nach Fig. 3 in Vorderansicht;
- Fig. 5: das Halteelement nach Fig. 3 und 4 in Draufsicht;
- Fig. 6: das Halteelement nach Fig. 3 bis 5 in perspektivischer Darstellung in geöffneter Position;
- Fig. 7: eine weitere Ausführungsmöglichkeit der Erfindung in Seitenansicht;
- Fig. 8: die Ausführungsform nach Fig. 7 in Vorderansicht;
- Fig. 9: einen Schnitt nach der Linie IX-IX in Fig. 7;
- Fig.10: einen Schnitt nach der Linie X-X in Fig. 8;
- Fig.11 a bis d: verschiedene Querschnittsformen des bandförmigen Haltebereichs;
- Fig.12 und 13 a bis e: verschiedene Ausführungsformen des bandförmigen Haltebereichs in Draufsicht und in Seitenansicht

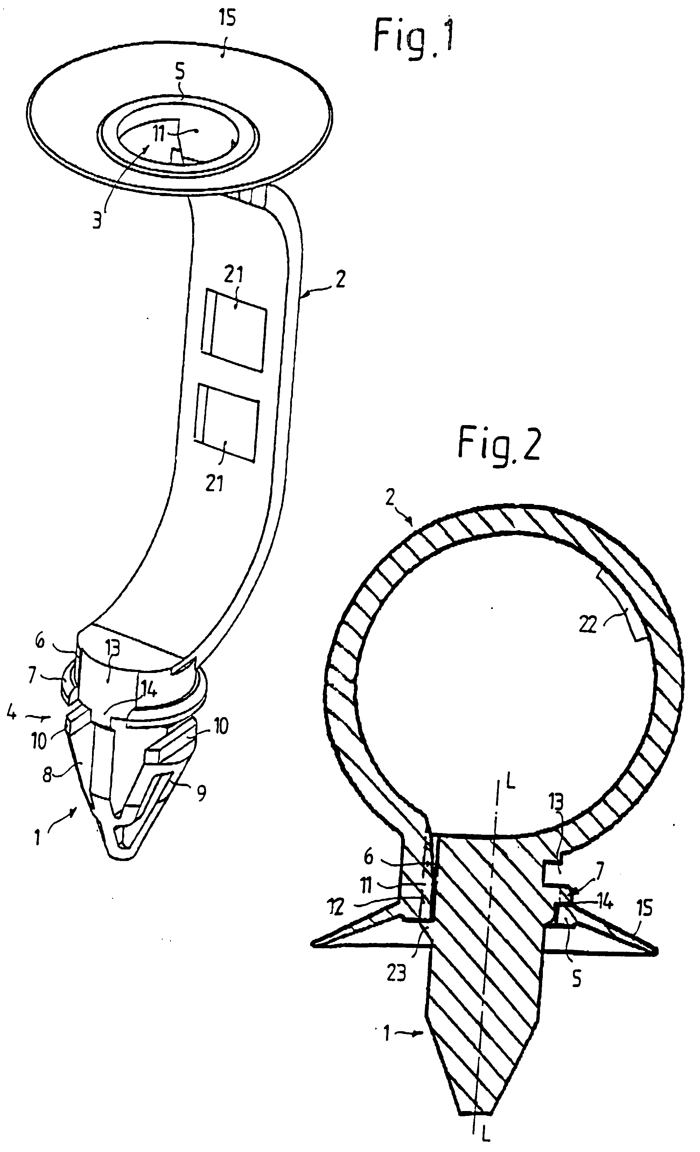

In Fig. 1 und 2 ist in einer ersten Ausführungsform ein Halteelement aus Kunststoff zur Befestigung mindestens eines rohrförmigen Körpers an einem nicht dargestellten Träger erkennbar. Dieses Halteelement weist einen mit dem Träger verbindbaren Befestigungsbereich 1 und einen bandförmigen Haltebereich 2 auf, welcher zum Umschlingen des rohrförmigen Körpers dient. Der bandförmige Haltebereich 2 weist hierbei endseitig eine Rast 3 auf, welche geeignet ist, mit einer Gegenrast 4 des Befestigungsbereichs 1 verbunden zu werden.

Wie aus Fig. 1 und 2 ersichtlich, besteht die Rast 3 aus einem geschlossenen Ring 5, welcher auf die aus einem Zapfenbereich 6 mit Bund 7 bestehende Gegenrast 4 aufschiebbar ist. Daraus resultiert die Möglichkeit, nach Umschlingen eines nicht näher dargestellten bandförmigen Körpers den Ring 5 gemäß Fig. 2 von unten in Richtung der Längsachse L-L des Befestigungselements 1 auf den Zapfenbereich 6 aufzuschieben, und zwar solange, bis der Bund 7 als Anschlag für den Ring 5 dient. Infolge der Spannung des elastischen Haltebereichs 2, verbleibt das Halteelement in seiner Montagestellung, d.h. der geschlossenen Position.

Bei dem Ausführungsbeispiel nach Fig. 1 und 2 weist das Befestigungselement zwei mit jeweils einer Abstufung 10 versehene, einander V-förmig gegenüberstehende, mit ihren oberen Endbereichen den Träger hintergreifende Federarme 8, 9 auf. Diese Federarme 8, 9 sind elastisch und bewegen sich nach Einsetzen in eine nicht näher dargestellte Trägeröffnung wieder in ihre in Fig. 1 dargestellte Position, wodurch das erfindungsgemäße Halteelement in geschlossener Form in der Trägeröffnung gesichert ist.

In Montagestellung des Halteelements ist - wie aus Fig. 2 erkennbar - der Ring 5 zwischen den Endbereichen der Federarme 8, 9 und dem Bund 7 angeordnet. Weiterhin kann der Zapfenbereich 6 mit einer Rastnase 23 nach Fig. 2 versehen sein, welche sich in Schließstellung hinter den Ring 5 lagert und diesen damit einwandfrei arretiert.

Statt der in Fig. 1 dargestellten einander gegenüberliegenden Federarme 8, 9 sind jedoch auch andere Haltelemente möglich, durch welche das erfindungsgemäße Teil an einem Träger befestigbar ist.

Aus Fig. 1 geht hervor, daß der Haltebereich 2 beispielsweise mit fensterartigen Öffnungen 21 versehen ist. Um einerseits die Halterung eines bandförmigen Körpers funktionssicher zu gestalten und andererseits das in Fig. 2 in Montagestellung dargestellte Halteelement sicher an einem Träger zu befestigen, ist es vorteilhaft, wenn der bandförmige Haltebereich 2 elastischer ausgebildet ist als der Befestigungsbereich 1 und der Zapfenbereich 6. Hierbei kann beispielsweise auch ein Zweikomponenten-Spritzverfahren Anwendung finden, wobei gewährleistet sein muß, daß der Haltebereich 2 aus einer elastischeren Materialkomponente besteht als der Befestigungsbereich 1 und der Ring 5, welche aus starren Materialkomponenten hergestellt sein können.

Aus Fig. 1 geht hervor, daß an den Ring 5 ein Hals 11 anschließt, welcher in den elastischen Haltebereich 2 übergeht. Hierbei kann der Hals 11 nach Fig. 2 innenseitig eine Führung 12 für den Zapfenbereich 6 der Gegenrast 4 aufweisen, so daß in Montagestellung die gesamte Einheit in sich stabil ist. Weiterhin können nach Fig. 1 und 2 der Bund 7 und der Zapfenbereich 6 jeweils mit einer den bandförmigen Haltebereich 2 gegenüberliegenden Ausnehmung 13 und 14 versehen sein.

Bei der Gestaltung des Ringes kann dieser so beschaffen sein, daß er in eine umlaufende Dichtlippe 15 übergeht. Durch diese umlaufende Dichtlippe wird in Montagestellung nach Fig. 2 eine nicht näher dargestellte Trägeröffnung einwandfrei und verschmutzungssicher überdeckt.

Soll beispielsweise ein rohrförmiger Körper gehaltert werden, welcher mit Querrippen versehen ist, besteht nach Fig. 2 die Möglichkeit, daß der Haltebereich 2 an seinem Innenumfang mindestens eine Arretiernocke 22 aufweist, welche geeignet ist, in das entsprechende Gegenprofil des rohrförmigen Körpers einzugreifen und diesen verschiebesicher zu haltern.

Bei der Ausführungsform nach Fig. 1 und 2 weist der Ring 5 eine umlaufende geschlossene Form auf.

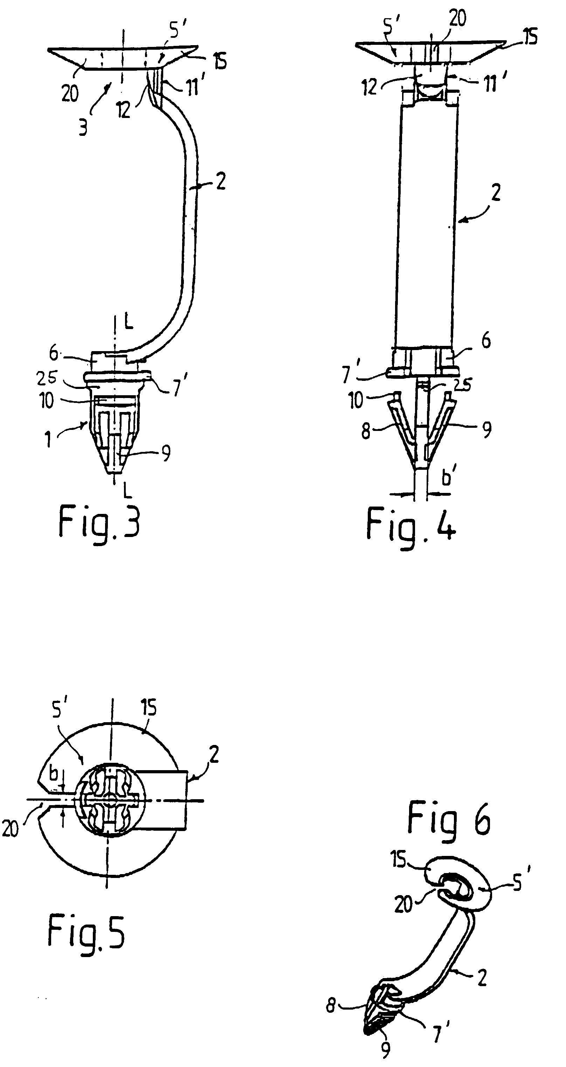

Nach Fig. 3 bis 6 besteht jedoch auch die Möglichkeit, daß ein Ring 5' mit einem durchgehenden Schlitz 20 versehen und quer zur Längsachse L-L auf den Zapfenbereich 6 aufschiebbar ist. Hierbei weist der Zapfenbereich 6 vorteilhafterweise einen Bund 7' auf, welcher zur Verriegelung des geschlitzten Rings 5' in Montagestellung dient und unterseitig in einem Steg 25 übergeht. Die Breite b' des Steges 25 ist hierbei kleiner als die Breite b des Schlitzes 20 (Fig. 4, Fig. 5).

Analog der Ausführungsform nach Fig. 1 und 2 kann an den Ring 5' ein Hals 11' anschließen, an welchen der bandförmige Haltebereich 2 angrenzt, wobei innenseitig eine Führung 12 für den Zapfenbereich 6 in Montagestellung vorgesehen ist. Auch hierdurch ergibt sich eine in sich stabile Einheit, welche nach Einbringen in die Montagestellung einwandfrei an einem Träger zu befestigen ist.

Identisch wie bei der Ausführungsform nach Fig. 1 und 2 kann der Befestigungsbereich 1 zwei jeweils mit einer Abstufung versehene, einander V-förmig gegenüberstehende, mit ihren oberen Endbereichen den Träger hintergreifende elastische Federarme 8, 9 aufweisen. Alternativ besteht jedoch auch die Möglichkeit, den Befestigungsbereich anders zu gestalten.

Auch bei der Ausführungsform nach Fig. 3 bis 5 kann der Ring 5' in eine umlaufende Dichtlippe 15 übergehen, wodurch in Montagestellung eine Trägeröffnung vor Verschmutzung geschützt ist.

Bei der Ausführungsform nach Fig. 3 bis 5 ist es ebenfalls vorteilhaft, daß der Haltebereich 2 elastischer ausgebildet ist als der Befestigungsbereich 1 und der Ring 5, wobei auch hier die Möglichkeit eines Zweikomponenten-Spritzverfahrens gegeben ist. Analog der Ausführungsform nach Fig. 1 und 2 kann auch hier der bandförmige Haltebereich 2 innenseitig mindestens eine Arretiernocke besitzen, um einen mit Querprofilen versehenen bandförmigen Körper verschiebesicher zu haltern.

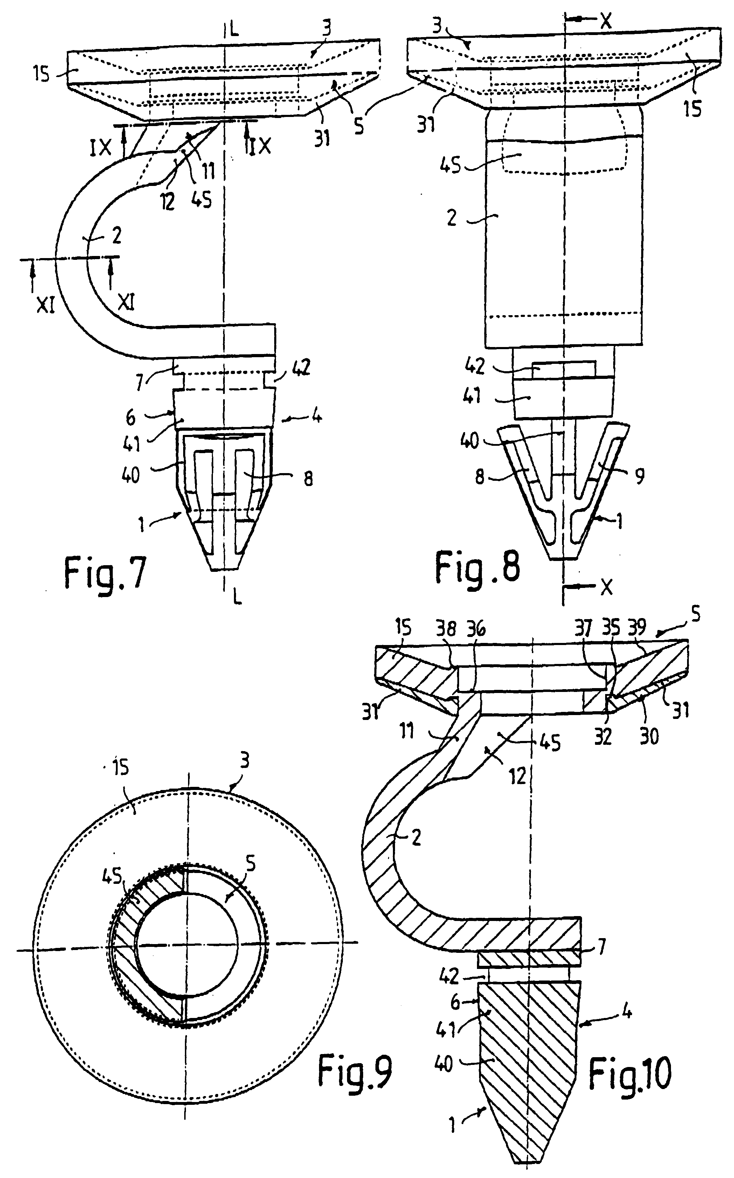

Während bei den vorhergehenden Ausführungsformen der Haltebereich 2 elastischer ausgebildet ist als der Befestigungsbereich 1 und der Ring 5, besteht nach Fig. 7 bis 10 die Möglichkeit, daß der bandförmige Haltebereich 2 (z.B. halbkreisförmig oder gerade) und der Ring 5 mit der Dichtlippe 15 aus einer weichen Materialkomponente hergestellt sind, wohingegen der Befestigungsbereich und die dem bandförmigen Haltebereich 2 zugewandte Oberseite 30 des Rings 5 aus einer härteren Materialkomponente bestehen. Hierbei kann die Oberseite 30 als Scheibe 31 ausgebildet sein und nach Fig. 10 zur Versteifung den gesamten Bereich des Rings 5 überdecken. Diese Scheibe 31 kann an ihrem inneren Umfang eine sich in eine Ausnehmung 35 des Rings 5 einlagernde Schulter 32 aufweisen. Aus Fig. 10 ist darüber hinaus ersichtlich, daß die Scheibe 31 eine vom inneren Umfang abnehmende Materialdicke besitzen kann.

Da der Ring 5 als umlaufendes Dichtelement 15 ausgebildet ist und aus einer weicheren Materialkomponente als die Scheibe 31 besteht, ergibt sich bei dieser Ausführungsform nach Fig. 7 bis 10 eine sehr gute Dichtwirkung des erfindungsgemäßen Halteelements 1 in Schließstellung, d.h. in der Position, in welcher die Gegenrast 4 in die zentrische Öffnung des geschlossenen Rings 5 eingeschoben ist.

Die Öffnung des Rings 5 kann hierbei eine mit der Gegenrast 4 zusammenwirkende Schulter 36 besitzen, an welcher eine Zylinderwandung 37 anschließt, die durch einen umlaufenden Bund 38 begrenzt ist. An der Innenseite des Rings 5 geht der Bund 38 in eine Kegelfläche 39 über.

Aus Fig. 7 und 10 ist ersichtlich, daß der bandförmige Haltebereich 2 im Bereich des Rings 5 als Führung 12 des Halters 11 Halbkreisform 45 besitzt. Hierbei kann die Halbkreisform 45 konisch zum Ring 5 zulaufend ausgebildet sein und damit eine Führung während der Montage der Gegenrast 4 innerhalb der zentrischen Öffnung des Rings 5 bewirken.

Die Gegenrast 4 kann nach Fig. 8 und 10 aus einem Stegbereich 40 und einem daran anschließenden Kegelstumpf 41 bestehen. Im Kegelstumpf 41 kann eine abgeschlossene oder durchgehende Freiarbeitung 42 vorhanden sein, welche als Montagehilfsmittel wirkt. Beispielsweise kann ein nicht näher dargestellter Zapfen in diese Freiarbeitung hineinragen, wodurch das ganze erfindungsgemäße Halteelement auf einfache Weise vor der Montage zwischenzulagern ist.

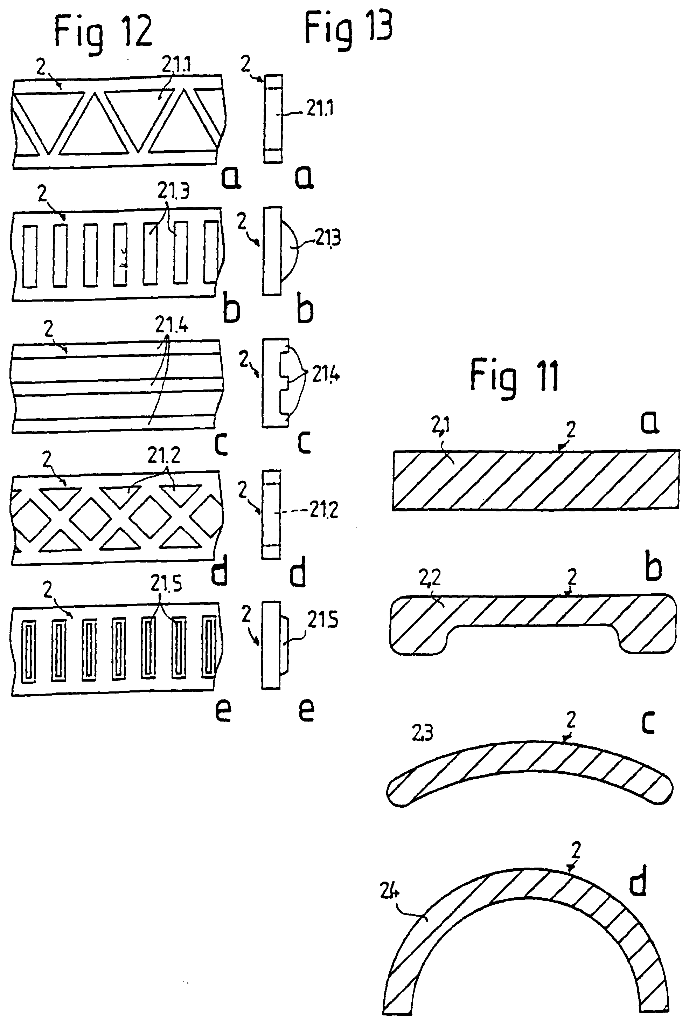

Fig. 11 zeigt in den Darstellungen a bis d, daß der bandförmige Haltebereich 2 im Querschnitt rechteckig (2.1), gewölbt (2.3), mit seitlichen Stegen (2.2) versehen oder gerundet (2.4) ausgebildet sein kann. Es ist damit eine gute Anpassung an verschiedene Gegebenheiten möglich.

Der bandförmige Haltebereich kann nach Fig. 1 mit fensterartigen Ausnehmungen 21 versehen sein. Während diese fensterartigen Ausnehmungen 21 rechteckig ausgebildet sind, besteht nach Fig. 12 und 13 a sowie d die Möglichkeit, daß diese Ausnehmungen 21.1 und 21.2 Dreieckform besitzen.

Nach Fig. 12 und 13 b sowie e kann der bandförmige Haltebereich 2 auch mit Querstegen 21.3 bzw. 21.5 versehen sein, welche entweder gerundet sind oder schräge Form bzw. Rechteckform besitzen. Statt dieser Querstege besteht nach Fig. 12 und 13 c auch die Möglichkeit, mindestens einen Längssteg 21.4 vorzusehen, wodurch der Haltebereich 2 eine zusätzliche Stabilität und Führung erhält.

Während bei der Ausführungsform nach Fig. 7 bis 10 der Ring 5, welcher zugleich infolge der weichen Materialkomponente die Dichtfunktion übernimmt, geschlossene Form besitzt, besteht in nicht näher dargestellter Ausführungsform auch die Möglichkeit, daß dieser Ring analog der Bauform nach Fig. 5 und 6 mit einem Schlitz 20 versehen ist. Auch hier ergibt sich analog der vorgenannten Bauform nach Fig. 7 bis 10 eine gute Dichtwirkung dann, wenn dieser Ring aus einer weichen Materialkomponente besteht, die von einer dünnen Scheibe 31 gemäß Fig. 10 überdeckt wird.

Allen Ausführungsformen ist in den zeichnerischen Darstellungen gemeinsam, daß der Befestigungsbereich 1 zwei jeweils mit einer Abstufung versehene, einander V-förmig gegenüberstehende, mit ihren oberen Endbereichen den Träger hintergreifende elastische Federarme 8, 9 (Fig. 1, Fig. 4, Fig. 8) aufweisen. Es besteht alternativ auch die nicht näher dargestellte Möglichkeit, statt dieser beiden Federarme einen sog. Tannenbaumbolzenbereich vorzusehen oder den Befestigungsbereich in an sich bekannter Weise konstruktiv anders zu gestalten.

Insgesamt ergibt sich durch die Erfindung ein aus Kunststoff bestehendes Halteelement 1, welches schnell und einfach zu montieren ist und nach Umschlingen eines rohrförmigen Körpers mit einem Träger verbunden werden kann. Dadurch, daß der Ring 5 bzw. 5' mit einem Zapfenbereich 6 zusammenwirkt, ergibt sich eine gute und abgedichtete Halterung in Montagestellung, so daß ein unbeabsichtigtes Öffnen auch bei höheren Belastungen, wie sie beispielsweise in der Kraftfahrzeugindustrie auftreten, einwandfrei vermieden wird.

## Patentansprüche

1. Halteelement aus Kunststoff zur Befestigung mindestens eines rohrförmigen Körpers an einem Träger, mit einem mit dem Träger verbindbaren Befestigungsbereich (1) und mit einem bandförmigen, den rohrförmigen Körper mit seiner Innenseite umgreifenden Haltebereich (2) mit endseitiger Rast (3), wobei die Rast (3) mit einer aus einem Zapfenbereich (6) bestehenden Gegenrast (4) verbindbar ist,
**dadurch gekennzeichnet,**
dass der Befestigungsbereich (1) als Zapfenbereich (6) mit einem Bund (7) und die Rast (3) als Ring (5, 5') ausgebildet ist, der von seiner einen zu umschlingenden Körper zugewandten Innenseite her in Richtung der Längsachse (L-L) des Befestigungselements (1) auf dem Zapfenbereich (6) aufschiebbar ist.

2. Halteelement nach Anspruch 1,
dadurch gekennzeichnet,
daß der Ring (5) geschlossene Form besitzt und der Bund (7) als Anschlag für den Ring (5) dient (Fig. 1, 2).

3. Haltelement nach Anspruch 1 und 2,
wobei das Befestigungselement (1) zwei jeweils mit einer Abstufung (10) versehene, einander V-förmig gegenüberstehende, mit ihren oberen Endbereichen den Träger hintergreifende Federarme (8, 9) aufweist,
dadurch gekennzeichnet,
daß in Montagestellung der Ring (5) zwischen den Endbereichen der Federarme (8, 9) und dem Bund (7) angeordnet ist.

4. Halteelement nach Anspruch 1 bis 3,
dadurch gekennzeichnet,
daß an den Ring (5) ein Hals (11) anschließt, welcher in den bandförmigen Haltebereich (2) übergeht.

5. Halteelement nach Anspruch 4,
dadurch gekennzeichnet,
daß der Hals (11) innenseitig eine Führung (12) für den Zapfenbereich (6) der Gegenrast (4) aufweist.

6. Halteelement nach einem der vorhergehenden Ansprüche,
dadurch gekennzeichnet,
daß der Bund (7) und der Zapfenbereich (6) jeweils mit einer dem bandförmigen Haltebereich (2) gegenüberliegenden Ausnehmung (13, 14) versehen sind.

7. Halteelement nach einem der vorhergehenden Ansprüche,
dadurch gekennzeichnet,
daß der Ring (5) in eine umlaufende Dichtlippe (15) übergeht.

8. Halteelement nach Anspruch 1,
dadurch gekennzeichnet,
daß der Ring (5') mit einem durchgehenden Schlitz (20) versehen ist (Fig. 3 bis 6).

9. Halteelement nach Anspruch 8,
dadurch gekennzeichnet,
daß der Zapfenbereich (6) einen Bund (7') aufweist, welcher zur Verriegelung des geschlitzten Rings (5') in Montagestellung dient.

10. Halteelement nach Anspruch 8 und 9,
dadurch gekennzeichnet,
daß an den mit einer umlaufenden Dichtlippe (15) versehenen Ring (5') ein Hals (11') anschließt, welcher in den bandförmigen Haltebereich (2) übergeht und innenseitig eine Führung (12) für den Zapfenbereich (6) in Montagestellung aufweist.

11. Halteelement nach den Ansprüchen 8 bis 10,
dadurch gekennzeichnet,
daß an dem Bund (7) unterseitig ein Steg (25) anschließt, dessen Breite (b') kleiner als die Breite (b) des Schlitzes (20) ist.

12. Halteelement nach einem der vorhergehenden Ansprüche,
dadurch gekennzeichnet,
daß der bandförmige Haltebereich (2) elastischer ausgebildet ist als der Befestigungsbereich (1) und der Ring (5).

13. Halteelement nach Anspruch 12,
dadurch gekennzeichnet,
daß der Haltebereich (2) aus einer anderen Materialkomponente besteht, als der Befestigungsbereich (1) und der Ring (5).

14. Halteelement nach einem der vorhergehenden Ansprüche,
dadurch gekennzeichnet,
daß der bandförmige Haltebereich (2) mit fensterartigen Ausnehmungen (21) versehen ist.

15. Halteelement nach einem der vorhergehenden Ansprüche,
dadurch gekennzeichnet,
daß der Haltebereich (2) innenseitig mindestens eine Arretiernocke (22) zum Fixieren eines mit Querprofilen versehenen rumpfförmigen Körpers aufweist.

16. Halteelement nach einem der vorhergehenden Ansprüche,
dadurch gekennzeichnet,
daß der Zapfenbereich (6) mindestens eine den Ring (5, 5') im Montagestellung hintergreifende Rastnase (23) aufweist.

17. Halteelement nach einem oder mehrere der Ansprüche 1 bis 7,
dadurch gekennzeichnet,
daß der bandförmige Haltebereich (2) und der Ring (5) aus einer weichen Materialkomponente und der Befestigungsbereich (1) und die dem bandförmigen Haltebereich (2) zugewandte Oberseite (30) des Rings (5) aus einer härteren Materialkomponente bestehen (Fig. 7 bis 10).

18. Haltelement nach Anspruch 17,
dadurch gekennzeichnet, daß
die als Scheibe (31) ausgebildete Oberseite (30) den gesamten Bereich des Rings (5) überdeckt und eine geringere Materialdicke besitzt als der Ring (5).

19. Halteelement nach Anspruch 17 und 18,
dadurch gekennzeichnet,
daß die Scheibe (31) am inneren Umfang eine sich in eine Ausnehmung (35) des Rings (5) einlagerbare Schulter (32) aufweist.

20. Halteelement nach Anspruch 17 bis 19,
dadurch gekennzeichnet,
daß die Scheibe (31) eine vom inneren Umfang abnehmende Materialdicke aufweist.

21. Halteelement nach Anspruch 17 bis 20,
dadurch gekennzeichnet,
daß der Ring (5) eine mit der Gegenrast (4) zusammenwirkende Schulter (36) besitzt, an welche eine Zylinderwandung (37) anschließt, die durch einen Bund (38) begrenzt ist.

22. Halteelement nach Anspruch 21,
dadurch gekennzeichnet,
daß der Bund (38) an der Innenseite des Rings (5) in eine Kegelfläche (39) übergeht.

23. Halteelement nach Anspruch 21,
dadurch gekennzeichnet,
daß die Gegenrast (4) aus einem Stegbereich (40) und einem daran anschließenden Kegelstumpf (41) besteht.

24. Halteelement nach Anspruch 23,
dadurch gekennzeichnet,
daß im Kegelstumpf (41) eine Freiarbeitung (42) angeordnet ist.

25. Halteelement nach Anspruch 17,
dadurch gekennzeichnet,
daß die Führung (12) des Halses (11) Halbkreisform (45) aufweist.

26. Halteelement nach Anspruch 25,
dadurch gekennzeichnet,
daß die Halbkreisform (45) konisch zum Ring (5) zulaufend ausgebildet ist.

27. Halteelement nach einem der vorhergehenden Ansprüche,
dadurch gekennzeichnet,
daß der bandförmige Haltebereich (2) im Querschnitt rechteckig (2.1), gewölbt (2.3.), mit seitlichen Stegen (2.2.) versehen oder gerundet (2.4) ausgebildet ist (Fig. 11a bis 11d).

28. Halteelement nach einem der vorhergehenden Ansprüche,
dadurch gekennzeichnet,
daß der bandförmige Haltebereich (2) mit Querstegen (21.3, 21.5) oder mit Längsstegen (21.4) versehen ist.

29. Haltebereich nach Anspruch 28,
dadurch gekennzeichnet,
daß die Querstege (21.3, 21.5) gewölbt, konisch oder rechteckig ausgebildet sind.

## Claims

1. Plastic retaining element for fastening at least one tubular body on a carrier, having a fastening region (1) which can be connected to the carrier, and having a band-like retaining region (2) which has its inside engaging around the tubular body and has an end-side catch (3), it being possible for the catch (3) to be connected to a mating catch (4) which comprises a stub region (6), characterized in that the fastening region (1) is designed as a stub region (6) with a collar (7) and the catch (3) is designed as a ring (5, 5') which can be pushed on the stub region (6), in the direction of the longitudinal axis (L-L) of the fastening element (1), from its inside, which is directed towards a body which is to be encompassed.

2. Retaining element according to Claim 1, characterized in that the ring (5) is of closed form and the collar (7) serves as a stop for the ring (5) (Figures 1, 2).

3. Retaining element according to Claims 1 and 2, the fastening element (1) having two resilient arms (8, 9) which are each provided with a stepped formation (10), are located opposite one another in the form of a V and have their top end regions engaging behind the carrier, characterized in that, in the installed position, the ring (5) is arranged between the end regions of the resilient arms (8, 9) and the collar (7).

4. Retaining element according to Claims 1 to 3, characterized in that the ring (5) is adjoined by a neck (11) which merges into the band-like retaining region (2).

5. Retaining element according to Claim 4, characterized in that, on the inside, the neck (11) has a guide (12) for the stub region (6) of the mating catch (4).

6. Retaining element according to one of the preceding claims, characterized in that the collar (7) and the stub region (6) are each provided with a cutout (13, 14), the latter being located opposite the band-like retaining region (2).

7. Retaining element according to one of the preceding claims, characterized in that the ring (5) merges into an encircling sealing lip (15).

8. Retaining element according to Claim 1, characterized in that the ring (5') is provided with a through-slit (20) (Figures 3 to 6).

9. Retaining element according to Claim 8, characterized in that the stub region (6) has a collar (7') which serves for locking the slit ring (5') in the installed position.

10. Retaining element according to Claims 8 and 9, characterized in that the ring (5'), which is provided with an encircling sealing lip (15), is adjoined by a neck (11') which merges into the band-like retaining region (2) and, on the inside, has a guide (12) for the stub region (6) in the installed position.

11. Retaining element according to Claims 8 to 10, characterized in that the underside of the collar (7) is adjoined by a web (25), of which the width (b') is smaller than the width (b) of the slit (20).

12. Retaining element according to one of the preceding claims, characterized in that the band-like retaining region (2) is of more elastic design than the fastening region (1) and the ring (5).

13. Retaining element according to Claim 12, characterized in that the material component of the retaining region (2) differs from that of the fastening region (1) and of the ring (5).

14. Retaining element according to one of the preceding claims, characterized in that the band-like retaining region (2) is provided with window-like cutouts (21).

15. Retaining element according to one of the preceding claims, characterized in that, on the inside, the retaining region (2) has at least one arresting protrusion (22) for fixing a body provided with transverse profiles.

16. Retaining element according to one of the preceding claims, characterized in that the stub region (6) has at least one latching nose (23), which engages behind the ring (5, 5') in the installed position.

17. Retaining element according to one or more of Claims 1 to 7, characterized in that the band-like retaining region (2) and the ring (5) consist of a soft material component and the fastening region (1) and the top side (30) of the ring (5), said top side being directed towards the band-like retaining region (2), consist of a harder material component (Figures 7 to 10) .

18. Retaining element according to Claim 17, characterized in that the top side (30), which is designed as a disc (31), covers over the entire region of the ring (5) and has a lesser material thickness than the ring (5).

19. Retaining element according to Claims 17 and 18, characterized in that, on the inner circumference, the disc (31) has a shoulder (32) which can be positioned in a cutout (35) of the ring (5).

20. Retaining element according to Claims 17 to 19, characterized in that the disc (31) has a material thickness which decreases from the inner circumference.

21. Retaining element according to Claims 17 to 20, characterized in that the ring (5) has a shoulder (36) which interacts with the mating catch (4) and is adjoined by a cylinder wall (37) which is bounded by a collar (38).

22. Retaining element according to Claim 21, characterized in that, on the inside of the ring (5), the collar (38) merges into a conical surface (39).

23. Retaining element according to Claim 21, characterized in that the mating catch (4) comprises a web region (40) and an adjoining truncated cone (41).

24. Retaining element according to Claim 23, characterized in that there is a recess (42) in the truncated cone (41).

25. Retaining element according to Claim 17, characterized in that the guide (12) of the neck (11) is of semicircular form (45).

26. Retaining element according to Claim 25, characterized in that the semicircular form (45) tapers conically to the ring (5).

27. Retaining element according to one of the preceding claims, characterized in that the band-like retaining region (2) is designed such that it is cross-sectionally rectangular (2.1), curved (2.3), provided with lateral webs (2.2) or rounded (2.4) (Figures 11a to 11d).

28. Retaining element according to one of the preceding claims, characterized in that the band-like retaining region (2) is provided with transverse webs (21.3, 21.5) or with longitudinal webs (21.4).

29. Retaining region according to Claim 28, characterized in that the transverse webs (21.3, 21.5) are designed such that they are curved, conical or rectangular.

## Revendications

1. Elément de retenue en matière plastique pour fixer au moins un corps tubulaire sur un support, comportant une partie de fixation (1) pouvant être reliée au support, et une partie de retenue en forme de bande (2), qui entoure par sa face intérieure le corps tubulaire et comporte un élément d'encliquetage (3) situé à son extrémité, l'élément d'encliquetage (3) pouvant être relié à un élément d'encliquetage antagoniste (4) formé par une partie en forme de téton (6),
caractérisé en ce
que la partie de fixation (1) est agencée sous la forme d'une partie formant téton (6) pourvue d'un collet (7) et que l'élément d'encliquetage (3) est agencé sous la forme d'un anneau (5,5'), qui peut être emmanché sur la partie formant téton (6), à partir d'une face intérieure tournée vers le corps devant être enserré, dans la direction de l'axe longitudinal (L-L) de l'élément de fixation (1).

2. Elément de retenue selon la revendication 1,
caractérisé en ce
que l'anneau (5) possède une forme fermée et que le collet (7) est utilisé en tant que butée pour l'anneau (5) (figures 1,2).

3. Elément de retenue selon les revendications 1 et 2, dans lequel l'élément de fixation (1) comporte deux bras de ressort (8,9), qui sont pourvus chacun d'une partie étagée (10), sont disposés l'un par rapport à l'autre de manière à former un V et s'engagent par leurs parties d'extrémité supérieures derrière le support,
caractérisé en ce
que dans la position de montage, l'anneau (5) est disposé entre les parties d'extrémité des bras de ressort (8,9) et le collet (7).

4. Elément de retenue selon les revendications 1 à 3, caractérisé en ce
qu'à l'anneau (5) se raccorde un col (11), qui se prolonge par la partie de retenue en forme de bande (2).

5. Elément de retenue selon la revendication 4, caractérisé en ce
que le col (11) comporte, sur sa face intérieure, un guide (12) pour la partie formant téton (6) de l'élément d'encliquetage antagoniste (4).

6. Elément de retenue selon l'une des revendications précédentes, caractérisé en ce
que le collet (7) et la partie formant téton (6) comportent chacun un évidement (13,14) qui est situé à l'opposé de la partie de retenue en forme de bande (2).

7. Elément de retenue selon l'une des revendications précédentes, caractérisé en ce
que l'anneau (5) se prolonge par une lèvre d'étanchéité circonférentielle (15).

8. Elément de retenue selon la revendication 1, caractérisé en ce
que l'anneau (5') est pourvu d'une fente continue (20). (Figures 3 à 6).

9. Elément de retenue selon la revendication 8, caractérisé en ce
que la partie formant téton (6) possède un collet (7'), qui est utilisé pour le verrouillage de l'anneau fendu (5') dans la position de montage.

10. Elément de retenue selon les revendications 7 et 8, caractérisé en ce
qu'à l'anneau (5'), qui est pourvu d'une lèvre d'étanchéité circonférentielle (15), se raccorde un col (11'), qui se prolonge par la partie de retenue en forme de bande (2) et comporte, sur sa face intérieure, un guide (12) pour la partie formant téton (6) dans la position de montage.

11. Elément de retenue selon les revendications 8 à 10, caractérisé en ce
qu'à la face inférieure du collet (7) se raccorde une barrette (27), dont la largeur (b') est inférieure à la largeur (b) de la fente (20).

12. Elément de retenue selon l'une des revendications précédentes, caractérisé en ce
que la partie de retenue enforme de bande (2) est agencée de manière à être plus élastique que la partie de fixation (1) et l'anneau (5).

13. Elément de retenue selon la revendication 12, caractérisé en ce
que la partie de retenue (2) est constituée par un composant matériel autre que celui de la partie de fixation (1) et de l'anneau (5).

14. Elément de retenue selon l'une des revendications précédentes, caractérisé en ce
que la partie de retenue en forme de bande (2) est pourvue d'ouvertures en forme de fenêtres (21).

15. Elément de retenue selon l'une des revendications précédentes, caractérisé en ce
que la partie de retenue (2) possède, sur sa face inférieure, au moins une came de blocage (22) pour fixer un corps de forme fuselée pourvu de profilés transversaux.

16. Elément de retenue selon l'une des revendications précédentes, caractérisé en ce
que la partie formant téton (6) comporte au moins un bec d'encliquetage (23) qui s'engage derrière l'anneau (5,5') dans la position de montage.

17. Elément de retenue selon une ou plusieurs des revendications 1 à 7, caractérisé en ce
que la partie de retenue en forme de bande (2) et l'anneau (5) sont constitués par un composant matériel souple et que la partie de fixation (1) et la face supérieure (3) de l'anneau (5) tournée vers la partie de retenue en forme de bande (2), sont constituées par un composant matériel plus dur (Figures 7 à 10).

18. Elément de retenue selon la revendication 17, caractérisé en ce
que la face supérieure (3) agencée en forme de rondelle (31) recouvre toute la zone de l'anneau (5) et possède une épaisseur de matière plus faible que l'anneau (5).

19. Elément de retenue selon les revendications 17 et 18, caractérisé en ce
que la rondelle (31) comporte sur sa périphérie intérieure un épaulement (32) pouvant être inséré dans un évidement (35) de l'anneau (5).

20. Elément de retenue selon les revendications 17 à 19, caractérisé en ce
que la rondelle (31) possède une épaisseur de matière qui diminue à partir de sa périphérie intérieure.

21. Elément de retenue selon les revendications 17 à 20, caractérisé en ce
que l'anneau (5) possède un épaulement (36), qui coopère avec l'élément d'encliquetage antagoniste (4) et auquel se raccorde une paroi cylindrique (37), qui est limitée par un collet (38).

22. Elément de retenue selon la revendication 21, caractérisé en ce
que le collet (38) se prolonge, au niveau de la face intérieure de l'anneau (5), par une surface conique (39).

23. Elément de retenue selon la revendication 21, caractérisé en ce
que l'élément d'encliquetage antagoniste (4) est constitué par une partie formant barrette (40) et par un tronc de cône (41) se raccordant à cette partie.

24. Elément de retenue selon la revendication 23, caractérisé en ce
qu'une partie dégagée (42) est formée dans le tronc de cône (41).

25. Elément de retenue selon la revendication 17, caractérisé en ce
que le guide (12) du col (11) possède une forme semi-circulaire (45).

26. Elément de retenue selon la revendication 25, caractérisé en ce
que la forme semi-circulaire (45) est agencée de manière à converger selon une disposition conique vers l'anneau (5).

27. Elément de retenue selon l'une des revendications précédentes, caractérisé en ce
que la partie de retenue en forme de bande (2) possède, en coupe transversale, une forme rectangulaire (2.1) ou une forme cintrée (2.3), ou est pourvue de barrettes latérales (2.2) ou a une forme arrondie (2.4) (figures 11a à 11d).

28. Elément de retenue selon l'une des revendications précédentes, caractérisé en ce
que la partie de retenue en forme de bande (2) comporte des barrettes transversales (21.3,21.5) ou des barrettes longitudinales (21.4).

29. Elément de retenue selon la revendication 28, caractérisé en ce
que les barrettes transversales (21.3,21.5) sont agencées avec une forme cintrée, conique ou rectangulaire.
